Europäisches Patentamt

European Patent Office

Office européen des brevets

(11) Publication number: **0 273 048 B1**

# EUROPEAN PATENT SPECIFICATION

(45) Date of publication of patent specification: **05.05.93**  (51) Int. Cl.5: **G01P 15/08**

(21) Application number: **87904347.9**

(22) Date of filing: **23.06.87**

(86) International application number:
**PCT/US87/01460**

(87) International publication number:
**WO 88/00350 (14.01.88 88/02)**

(54) **TRANSLATIONAL ACCELEROMETER.**

(30) Priority: **27.06.86 US 879473**

(43) Date of publication of application:
**06.07.88 Bulletin 88/27**

(45) Publication of the grant of the patent:
**05.05.93 Bulletin 93/18**

(84) Designated Contracting States:
**CH DE FR GB LI**

(56) References cited:
| DE– A– 3 038 660 | US– A– 3 498 138 |
| US– A– 4 071 838 | US– A– 4 372 162 |
| US– A– 4 498 342 | US– A– 4 553 436 |

(73) Proprietor: **SUNDSTRAND CORPORATION**
**4949 Harrison Avenue P.O. Box 7003**
**Rockford Illinois 61125– 7003(US)**

(72) Inventor: **HANSON, Richard, A.**
**21220 Northeast 156th Street**
**Woodinville, WA 98072(US)**
Inventor: **PETERS, Rex, B.**
**17100 199th Place Northeast**
**Woodinville, WA 98072(US)**
Inventor: **NORLING, Brian, Lee**
**1532 145th Place Southeast**
**Mill Creek, WA 98012(US)**
Inventor: **URBACH, Edward, Allan**
**276 2nd & Valley Street Southeast**
**Duvall, WA 98019(US)**

(74) Representative: **Arthur, Bryan Edward et al**
**Withers & Rogers 4 Dyer's Buildings Holborn**
**London EC1N 2JT (GB)**

## Description

The present invention relates to accelerometers and, in particular, to high performance accelerometers suitable for use in inertial navigation systems.

An example of a prior art accelerometer design with high performance potential is described in U.S. – A – 3,702,073. The accelerometer shown in that patent comprises three primary components, namely, a proof mass assembly and upper and lower stators between which the proof mass assembly is supported. The proof mass assembly includes a movable reed that is suspended via flexure elements to an outer annular support member. The reed and outer annular support member are commonly provided as a unitary structure composed of fused quartz.

Both upper and lower surfaces of the reed include capacitor plates and force restoring coils. Each force restoring coil is positioned on the reed such that the central axis of the coil coincides with a line that extends through the center of the reed and that is normal to the top and bottom surfaces of the reed. This line is coincident with the sensitive axis of the accelerometer. A plurality of mounting pads are formed at spaced apart positions around the upper and lower surfaces of the annular support ring. These mounting pads mate with inwardly facing surfaces of the upper and lower stators when the accelerometer is assembled.

Each stator is generally cylindrical, and has a bore provided in its inwardly facing surface. Contained within the bore is a permanent magnet. The bore and permanent magnet are configured such that an associated one of the force restoring coils of the proof mass assembly fits within the bore, with the permanent magnet being positioned within the cylindrical core of the force restoring coil. Current flowing through the coil therefore produces a magnetic field that interacts with the permanent magnet to produce a force on the reed. Also provided on the inwardly facing surfaces of the stators are capacitor plates configured to form capacitors with the upper and lower capacitor plates on the reed. Thus, movement of the reed with respect to the upper and lower stators results in a differential capacitance change.

In operation, the accelerometer is affixed to an object whose acceleration is to be measured. Acceleration of the object along the sensitive axis results in pendulous, rotational displacement of the reed and coils with respect to the support ring and the stators. The resulting differential capacitance change caused by this displacement is sensed by a suitable feedback circuit. The feedback circuit then produces a current that, when applied to the force restoring coils, tends to return the reed to its neutral position. The magnitude of the current required to maintain the reed in its neutral position is directly related to the acceleration along the sensitive axis.

One of the most significant advantages of the accelerometer described above is that the reed, flexures and annular support member may be fabricated from a single piece of fused quartz, resulting in flexures with very high bias stability. A significant disadvantage of this accelerometer design is that the output is an analog signal. The accelerometer output signal must therefore be processed by a digital – to – analog converter or voltage – to – frequency converter prior to being used in a digital system. A comparatively new type of accelerometer that has an inherently digital output is the vibrating beam accelerometer, or VBA. The VBA is one member of a class of sensors that uses a force sensitive, crystal controlled oscillator as a force – to – frequency converter. In the case of the VBA, the force measured is the force required to accelerate a proof mass, and the oscillating crystal is a slender beam mechanically loaded along its longitudinal axis while being oscillated transversely in a beam bending mode. Just as the transverse component of restoring force in a guitar string will vary its frequency as a function of tension, so the axial force on an oscillating beam will vary its frequency as a function of tension or compression. The beam has a fixed frequency, determined by its mass and elastic properties, at which it oscillates under zero longitudinal load. Tension will increase that frequency, while compression will decrease it.

The VBA shares a design characteristic with all other sensors that depend on vibrating elements, in that spurious results can be obtained if significant amounts of vibratory energy are allowed to leave the system. In a VBA, the common solution to this problem is to use a crystal that consists of two slender side – by – side beams, separated by a narrow central slot except at the beam ends wherein they merge into a common surface for attachment to associated structures. Gold electrodes are applied to the surfaces of the beams, such that the piezoelectric properties of the crystal material may be used to excite the twin beams into resonance in a transverse oscillation mode in which the two beams move in their common plane 180° out of phase with one another. In this mode, the tight coupling between the end portions of the beams due to the very narrow slot causes them to resonate as a single structure at a single frequency, while the opposed stress fields associated with the bending moments at the ends of the beams merge and rapidly disappear, and are therefore not transmitted into surrounding structures.

All VBAs possess a number of significant advantages, including excellent scale factor stability. Many error sources can be greatly reduced by using two proof masses and two sensing crystals operated in a push−pull configuration, such that one crystal is put in compression while the other is put in tension, and treating the output as some function of the frequency difference. This method of measurement cancels out many common mode errors, including the contribution of force crystal nonlinearity to the vibration rectification coefficient (VRC). However, a disadvantage of the use of dual proof masses is that identity of dynamic response is difficult to achieve at frequencies approaching the sensor natural frequencies. An additional potential disadvantage of VBAs is that the proof mass requires caging to protect the crystal elements against shock overloads. Caging can be made difficult by full scale deflection on the order of 2.5 $\mu$m (100 microinches). Shock caging is also sensitive to mismatches in coefficients of thermal expansion.

The crystal used as a force−to−frequency conversion element in a VBA can respond to forces only in one direction. This feature requires that the proof mass to which the crystal is attached have at least four of its six possible degrees of freedom relative to the instrument case constrained by some means. Although many constraints have been tried, it is generally considered that flexures provide the optimum means of proof mass constraint. In general, VBAs designed to date have made use of a flexure that constrains the proof mass to a single degree of freedom, i.e., rotational motion about a hinge axis passing through the flexures. The force sensing crystal is attached to the proof mass, typically at its center of mass or at the end of the proof mass opposite the flexure, and extends in a direction normal to the hinge axis and to the pendulous axis. The force sensing crystal is therefore tangetial to the circular arc to which the proof mass is constrained by the flexure.

US 4,071,838 discloses an accelerometer for measuring acceleration along a sensitive axis, comprising:
a body;
a proof mass;
mounting means for mounting the proof mass to the body, the mounting means comprising first and second flexures connected to the proof mass and arranged to permit substantially uncoupled translational and rotational motion of the proof mass with respect to the body such that the translational motion is along the sensitive axis (SA) and such that the rotational motion is about a hinge axis (HA) perpendicular to the sensitive axis, the first and second flexures being positioned on opposite sides of a pendulous axis (PA) that is normal to the hinge axis and to the sensitive axis and that passes through the center of mass of the proof mass, whereby acceleration of the accelerometer along the sensitive axis results in said translational motion of the proof mass along the sensitive axis; and
sensing means for reacting to said translational motion by producing a signal indicative of acceleration along the sensitive axis.

The present invention provides an accelerometer as disclosed in US 4,071,838 characterised in that each flexure intersects a plane containing the sensitive (SA) and hinge (HA) axis. In a preferred embodiment, the accelerometer combines the long term bias stability of fused quartz flexures with the inherently digital characteristics of crystalline quartz force sensors.

Further preferred embodiments are defined in the dependent claims.

A preferred accelerometer in accordance with the present invention is described below by way of example only with reference to Figures 1 to 12 of the accompanying drawings, wherein:
FIGURE 1 is an exploded perspective view of a preferred embodiment of the accelerometer of the present invention;
FIGURE 2 is a top plan view of the reed assembly;
FIGURE 3 is a cross−sectional view of the accelerometer of FIGURE 1 taken in the plane defined by sensitive axis SA and pendulous axis PA;
FIGURE 4 is a cross−sectional view taken along the line 4−4 of FIGURE 2.
FIGURE 5 is a schematic view showing rotation about hinge axis HA;
FIGURE 6 is a schematic view showing translation along sensitive axis SA;
FIGURE 7 is a schematic view showing the effect of acceleration on the quartz crystals;
FIGURE 8 is a schematic view showing the effect of differential thermal expansion on the quartz crystals;
FIGURE 9 is a schematic view of a frequency difference technique for determining acceleration using a pair of quartz crystals;
FIGURE 10 is a top plan view of the reed assembly showing the bridges;
FIGURE 11 is a partial cross−sectional view of a bridge comprising fused quartz; and
FIGURE 12 is a partial cross−sectional view of a bridge composed of an adhesive substance.

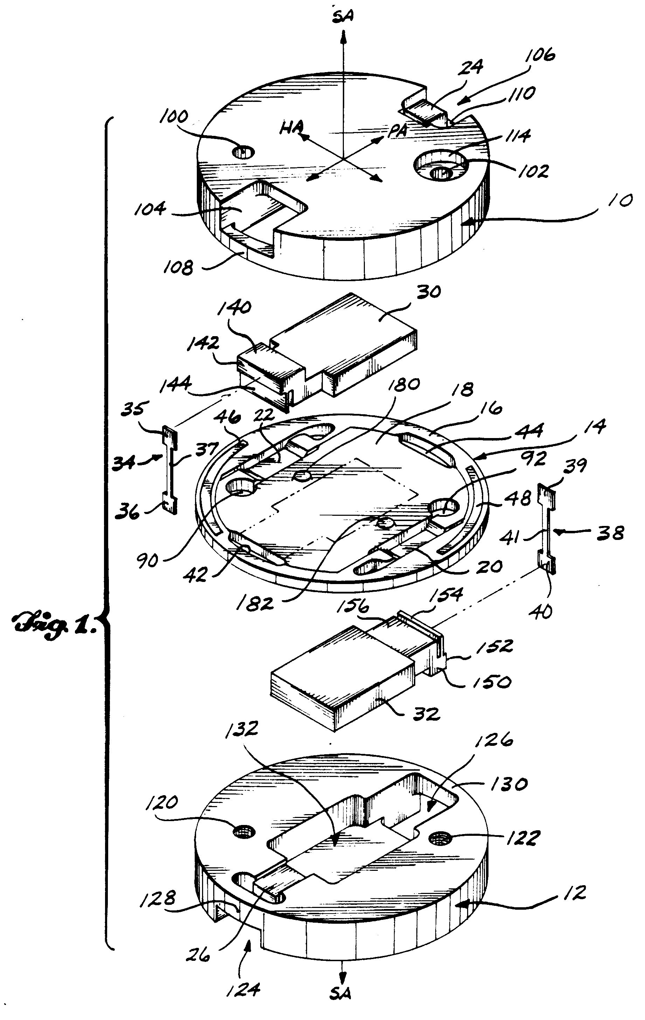

FIGURE 1 presents an exploded perspective view of one preferred embodiment of the accelerometer of the present invention. The accelerometer includes upper frame 10 and lower frame 12, between which quartz reed assembly 14 is supported. The accelerometer as a whole has a generally cylindrical shape in which the central axis of the cylinder is coincident with sensitive axis SA. The reed assembly includes annular support 16 from which proof mass base 18 is supported by flexures 20 and 22. The flexures permit translation of proof mass base 18 along sensitive axis SA, and rotation of the proof mass base about hinge axis HA that is normal to the sensitive axis and parallel to the plane of reed assembly 14. Weight 30 is secured to the upper surface of proof mass base 18, and weight 32 is secured to the lower surface of the proof mass base. Weights 30 and 32 and the proof mass base therefore move as a unit, and this unit is hereafter referred to as the proof mass.

The accelerometer of FIGURE 1 further includes quartz force sensing crystals 34 and 38. Crystal 34 comprises end sections 35 and 36 interconnected by center section 37. Center section 37 comprises a pair of closely spaced beams that are caused to vibrate in the plane of the beams, 180° out of phase with one another. End section 35 is connected to weight 30, and end section 36 is connected to mounting block 26 that in turn is connected to lower frame 12. Crystal 38 is preferably identical to crystal 34, and comprises end sections 39 and 40 and center section 41. End section 39 is connected to mounting block 24 that in turn is connected to upper frame 10, and end section 40 is connected to weight 32. The center section 37 of crystal 34 passes through opening 42 in reed assembly 14, and center section 41 of crystal 38 passes through opening 44 in reed assembly 14. The upper surface of annular support 16 includes raised mounting pads 46 and 48 symmetrically disposed on opposite sides of the reed assembly from one another. The lower surface of annular support 16 includes a similar pair of mounting pads. Aside from crystals 34 and 38, the mounting pads provide the only points of contact between reed assembly 14 and the upper and lower frames. Pads 46 and 48 are both elongated in the circumferential direction and narrow in the radial direction, an arrangement that minimizes the coupling of dishing forces into the flexures.

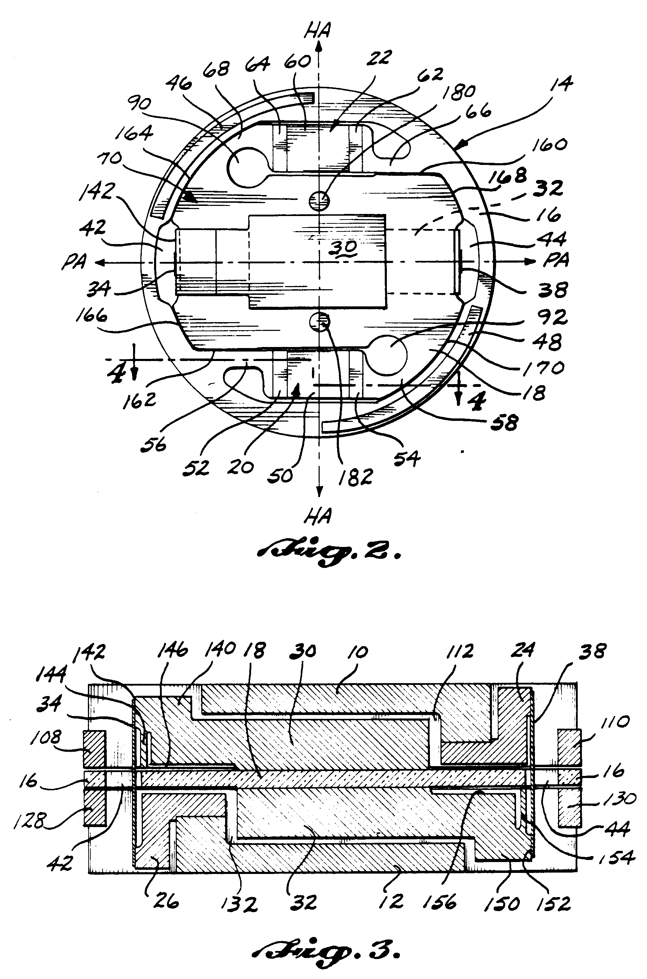

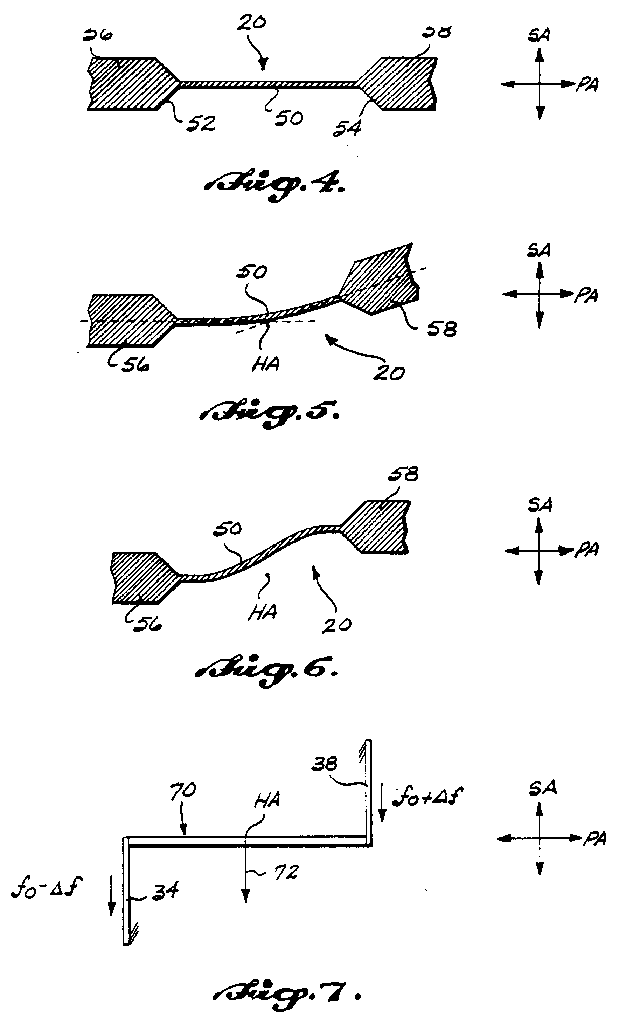

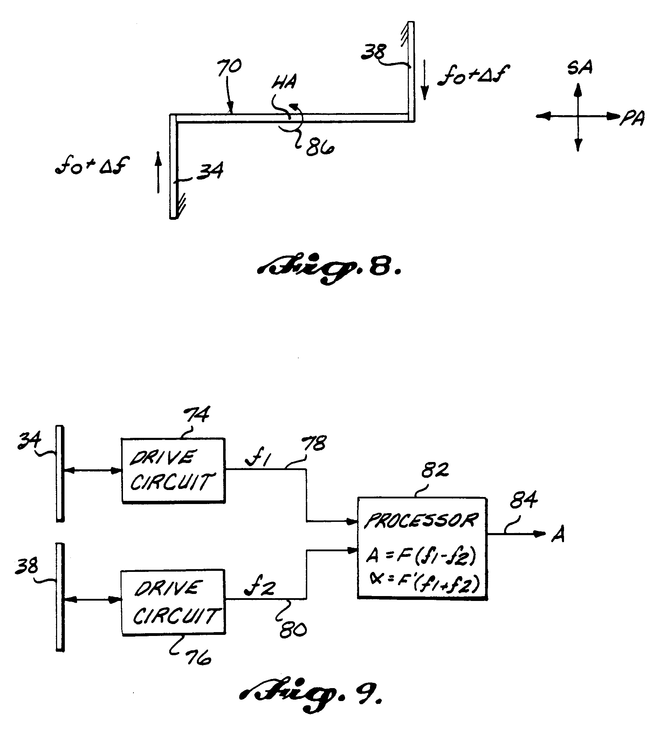

Reed assembly 14 is illustrated in greater detail in FIGURES 2 – 4. With particular reference to flexure 20 shown in FIGURES 2 and 4, the flexure is a flat leaf flexure comprising a thin central leaf 50 flanked by tapered sections 52 and 54. As used herein, the term leaf member or leaf flexure denotes a flexure having a width sufficient to carry loads in shear with minimal compliance, i.e., a flexure having sufficient width to resist lateral forces (along the hinge axis) without allowing the ends of the flexures to rotate sufficiently to increase the spring rate while under such a lateral load. Tapered section 52 comprises the end of arm 56 that extends inward from annular support 16. Tapered section 54 comprises the end of arm 58 that extends from proof mass base 18. Flexure 22 is identical to flexure 20, except that it faces in the opposite direction, i.e., the points of connection of flexures 20 and 22 to annular support 16 are on opposite sides of hinge axis HA with respect to one another. The points of connection of the flexures to the proof mass base are similarly on opposite sides of the hinge axis from one another. Flexure 22 comprises central leaf 60, flanked by tapered sections 62 and 64. Tapered section 62 comprises the end of arm 66 that extends inward from annular support 16, and tapered section 64 comprises one end of arm 68 that extends from proof mass base 18.

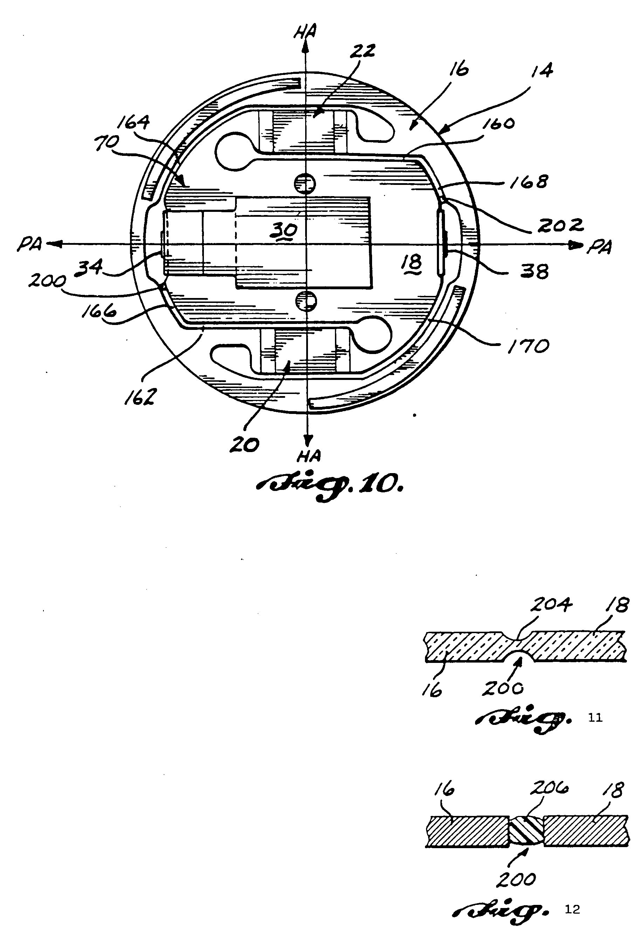

Flat leaf flexures of the type shown in FIGURES 2 and 4 permit two distinct types of proof mass motion. The first type of motion, termed angular bending, is illustrated in exaggerated form in FIGURE 5 for flexure 20, and consists of rotation of the proof mass base and arm 58 with respect to the annular support and arm 56. For comparatively small deflections, the effective center of rotation is at hinge axis HA that is positioned at the intersection of the centerlines of arms 56 and 58. The second type of motion permitted by flexure 20 is illustrated in exaggerated form in FIGURE 6, and consists of translation of the proof mass base and arm 58 with respect to the annular support and arm 56, the direction of translation being normal to the reed assembly and parallel to sensitive axis SA of the accelerometer. The deflection shown in FIGURE 6 is commonly referred to as S – bending deflection. Therefore, unlike conventional flexures that permit a single, rotational degree of freedom, the flexures utilized in the present invention provide two degrees of freedom, a rotational motion about a hinge axis that lies in the plane of the reed assembly, and translational motion normal to the plane of the reed assembly and parallel to the sensitive axis of the accelerometer. With reference to FIGURE 2, it will be seen that flexures 20 and 22 are aligned with one another in a left to right sense, as viewed in FIGURE 2, and the hinge axes of flexures 20 and 22 therefore coincide, such that the entire proof mass rotates about a single hinge axis HA that is common to both flexures. The pendulous axis PA of the proof mass is perpendicular to hinge axis HA, is in the plane of annular support 16, and passes through the centerlines of crystals 34 and 38.

Other arrangements of flexures 20 and 22 may be used within the broad scope of the present invention. For example, flexure 22 may be reversed from left to right, such that in FIGURE 2, the right hand ends of both flexures are connected to proof mass base 18. However, as more fully described below, the use of oppositely directed flexures eliminates a potential cross – coupling effect, and also provides a third axis of shock caging. Oppositely directed flexures are therefore preferred for most applications.

The operation of the accelerometer of FIGURES 1 – 3 is illustrated in FIGURES 7 and 8. FIGURE 7 shows proof mass 70 (corresponding to proof mass base 18 and weights 30 and 32) having crystal 34 fastened to one end and crystal 38 fastened to its opposite end along pendulous axis PA. The flexures, not shown in FIGURE 7, permit proof mass 70 to translate upward or downward along sensitive axis SA and to rotate about hinge axis HA. For simplicity, it will be assumed in the present discussion that the center of mass of proof mass 70 is located midway between crystals 34 and 38, at the intersection of pendulous axis PA and hinge axis HA. Hinge axis HA is directed out of the plane of the drawing in FIGURE 7.

In the arrangement shown in FIGURE 7, assume that the structure to which the accelerometer is secured is accelerated in an upward direction. As a result, in a frame of reference of the accelerometer, proof mass 70 will experience a downward deflection, indicated by arrow 72, resulting in downward forces on crystals 34 and 38. The downward force exerted by proof mass 70 on crystal 34 compresses the crystal, and thereby lowers the crystal's resonant frequency. Assume that crystal 34 oscillates at frequency $f_0$ in the absence of an applied force, and that the compression indicated in FIGURE 7 causes the crystal's resonant frequency to change to $f_0 - \Delta f$. The downward force exerted by proof mass 70 on crystal 38 puts crystal 38 in tension and, as a result, the resonant frequency of crystal 38 increases to $f_0 + \Delta f$. In this simplified example, it has been assumed that the zero load frequency $f_0$ is the same for both crystals, and that the magnitude of the change $\Delta f$ is also the same for both crystals.

Crystals 34 and 38 are connected in a known type of acceleration measuring circuit that is schemati – cally illustrated in FIGURE 9. Crystal 34 includes electrodes deposited on its surface that are electrically connected to drive circuit 74. The drive circuit provides the energy for vibrating crystal 34, and produces an output signal on line 78 having a frequency $f_1$ equal to the crystal oscillation frequency. Similarly, drive circuit 76 is electrically coupled to crystal 38, and produces an output signal on line 80 having a frequency $f_2$ equal to the oscillation frequency of crystal 38. The signals on line 78 and 80 are input to processor 82 that determines the acceleration (A) as some function of the frequency difference $f_1 - f_2$, and that produces a signal representing such acceleration on line 84. Further information concerning such an acceleration measuring circuit may be found in U.S. Patent 4,467,651. With reference to FIGURE 7, it may be seen that the linear acceleration along sensitive axis SA will result in signals on lines 78 and 80 having frequencies $f_0 - \Delta f$ and $f_0 + \Delta f$ respectively, such that the frequency difference $f_1 - f_2$ will be equal to $2\Delta f$. The frequency changes of both crystals therefore combine to produce the acceleration signal. The total frequency difference $2\Delta f$ will be as large as for a single crystal device connected to the same proof mass.

Inspection of FIGURES 7 and 8 shows that if the accelerometer is subjected to an angular acceleration, the frequencies $f_1$ and $f_2$ will either both increase or both decrease. Thus as a result of the symmetry of the accelerometer, angular acceleration $\alpha$ can also be obtained by processor 82 as a function of the frequency sum $f_1 + f_2$. In particular, if it is assumed that each crystal 34 and 38 has the following force (F) to frequency (f) characteristic:

$$f = f_0 + K_1 F$$

where $f_0$ and $K_1$ are constants, then it can be shown that the angular acceleration $\alpha$ is given by

$$\alpha = \frac{f_1 + f_2}{K_1 \, J/R}$$

where J is the moment of inertia of the proof mass about its own center of mass, and R is the distance from the proof mass center of mass to the crystal attachment point. In determining angular acceleration, there is no cancellation of even order nonlinearities, so processing must be done as for a single force sensing crystal design. As in the single crystal design, static linearization is not a problem, but clock errors and rectification errors may be large. If these are accuracy limitations, then it will in general be necessary to use a highly stable clock and/or a very high sampling rate.

FIGURE 8 illustrates the insensitivity of the accelerometer of the present invention to thermal effects. The components of the accelerometer are of necessity composed of materials having different coefficients of thermal expansion. Reed assembly 14 is preferably composed of fused or amorphous quartz, a substance having a coefficient of thermal expansion that is essentially zero. Crystals 34 and 38 are composed of crystalline quartz, a substance having a comparatively high coefficient of thermal expansion. Intermediate components must therefore accommodate these two quite different materials. Weights 30 and 32 and mounting blocks 24 and 26 are preferably composed of beryllium copper, a material having a comparatively high coefficient of thermal expansion, approximately equal to that of crystalline quartz. Upper frame 10 and lower frame 12, aside from mounting blocks 24 and 26, are preferably composed of Invar alloy, an iron − nickel alloy having a very low coefficient of thermal expansion, approximately one − tenth that of beryllium copper.

As the temperature of the accelerometer changes, the dimensions of crystals 34 and 38 and mounting blocks 24 and 26 change to a greater extent than do the dimensions of the other components of the accelerometer. The effect of such change is illustrated in FIGURE 8. It is assumed that the temperature of the accelerometer has been lowered, and as a result crystals 34 and 38 contract and rotate proof mass 70 in the direction indicated by arrow 86 about hinge axis HA. The flexures supporting proof mass 70 will resist this rotation, resulting in a rotational force in the opposite direction from arrow 86, producing a tension force on crystal 34 and a similar tension force on crystal 38. These forces will typically be quite small for the illustrated embodiment having leaf flexures, since the rotational stiffness of such flexure is quite small compared to their translational stiffness. As a result of these forces, the signals on lines 78 and 80 (FIGURE 9) will both have frequencies of $f_0 + \Delta f$, and the frequency difference $f_1 − f_2$ will therefore be zero. As a result, in the first approximation, temperature effects do not produce scale factor or bias errors in the determination of acceleration.

Reed assembly 14, as shown for example in FIGURE 2, could be utilized in a closed loop ac − celerometer of the type described in U.S. Patent No. 3,702,073. In such an embodiment, the upper and lower surfaces of the proof mass would include capacitor plates, each capacitor plate forming a capacitor with the adjacent frame. The capacitors would be connected to a pick − off circuit for measuring proof mass motion along the sensitive axis. In response to a signal indicating such motion, a force balancing system would return the proof mass to its null position, and the strength of the signal driving the force balancing system would then be a measure of the acceleration. A suitable force balancing system would include magnetic and electrostatic force balancing arrangements. In a closed loop system, a dual servo system may be required to prevent rotation of the proof mass. Alternately, force crystals could be used to provide both the pickoff function and to prevent proof mass rotation.

Referring again to FIGURES 1 − 3, upper frame 10 comprises a generally disk − shaped body that includes openings 100 and 102, cutaway sections 104 and 106, and central cavity 112 (FIGURE 3) in the lower surface of the upper frame. Openings 100 and 102 extend through the upper frame parallel to sensitive axis SA, and the upper portion of opening 102 includes enlarged area 114 to accommodate a screw head. Cutaway sections 104 and 106 are disposed opposite one another along pendulous axis PA. Both cutaway sections terminate short of the lower surface of upper frame 10, to form rims 108 and 110, respectively. Central cavity 112 is dimensioned to accommodate weight 30. As best shown in FIGURE 3, mounting block 24 is fastened directly to upper frame 10, such as by brazing, such that the mounting block occupies a major part of cutaway section 106.

Lower frame 12 is essentially identical to upper frame 10, although in the assembled accelerometer the lower frame is rotated about 180° about hinge axis HA with respect to the upper frame. Lower frame 12 includes openings 120 and 122, cutaway sections 124 and 126 bounded by rims 128 and 130 respectively, and cavity 132 for accommodating weight 32. In the assembled accelerometer, openings 100 and 120 are aligned with opening 90 in reed assembly 14, and openings 102 and 122 are aligned with opening 92 in reed assembly 14. Screws may therefore be passed vertically through these openings to secure the upper and lower frames and reed assembly into a mechanical unit. Opening 120 includes an enlarged area at the lower end of the opening, similar to enlarged area 114 for opening 102. A first screw is therefore passed vertically upward through openings 120, 90 and 100, and a second screw passes vertically downward through openings 102, 92 and 122.

The use of screws rather than welding to hold the accelerometer of the present invention together provides both for easier assembly of the instrument and for greater control of preload force. Openings 100 and 102 are radially symmetric with respect to sensitive axis SA, and are also positioned along a diameter that intersects the centers of mounting pads 46 and 48. The use of two mounting pads is a departure from conventional designs, most of which have used three or more pads to secure a reed assembly between upper and lower stators or frame members. The use of two pads as illustrated in FIGURES 1 and 2 maintains the radial symmetry of the reed assembly. Pads 46 and 48 are elongated in the circumferential direction, but shortened in the radial direction to avoid coupling of any dishing strains due to preloading into the sensing assembly.

Weight 30 includes end 140 that has a reduced width but an increased height with respect to the main body of the weight. The increased height of end 140 is accommodated by cutaway sections 104 in upper frame 10. End 140 includes laterally facing mounting surface 142, downwardly extending blade 144, and slightly recessed lower surface 146 (FIGURE 3). Blade 144 is dimensioned so as to be compliant along pendulous axis PA. Mounting surface 142 is used to mount end section 35 of crystal 34. Recessed lower surface 146 cooperates with blade 144 to permit end 140 to be securely mounted to the proof mass while remaining substantially out of contact with the proof mass base, thereby accommodating thermally induced movement along the pendulous axis between these structures without transmitting strain to end 140 or to the proof mass base.

Weight 32 is essentially identical to weight 30, although it is rotated 180˚ with respect to weight 30 about hinge axis HA. Weight 32 includes end 150 that has a reduced width but an increased height with respect to the main body of the weight. The increased height of end 150 is accommodated by cutaway section 126 in lower frame 12. End 150 includes laterally facing and mounting surface 152, upwardly extending blade 154, and slightly recessed lower surface 156. Mounting surface 152 is used to mount lower end 40 of crystal 38. Recessed lower surface 156 cooperates with blade 154 to permit end 150 to be securely mounted to proof mass base 18 while remaining substantially out of contact with the proof mass base, thereby accommodating thermally induced relative movement.

In the embodiments shown in FIGURES 1 – 3, weights 30 and 32 and proof mass base 18 are constructed such that the center of mass of proof mass 70 is at the intersection of hinge axis HA and pendulous axis PA. In this embodiment, the translational and rotational motions of the proof mass are substantially uncoupled, in that an acceleration along the sensitive axis produces only translational motion, and differential thermal expansion produces only rotational motion. However, the center of gravity of the proof mass could be relocated to a different position along pendulous axis PA. In such an arrangement, the translational and rotational motions of the proof mass would be coupled, and acceleration along the sensitive axis would result in the translational motion of the proof mass illustrated in FIGURE 6, as well as in the rotational movement of the proof mass, as indicated in FIGURE 5. For a similar reason, differential thermal expansion of different parts of the accelerometer would also result in mixed translational and rotational movement. In such an accelerometer, the location of the center of mass of the proof mass, and the net translational and rotational compliance of the flexures combined with the force sensing elements, should be chosen so that acceleration of the accelerometer along the sensitive axis results in a combination of translational motion of the proof mass along the sensitive axis and rotational motion of the proof mass about the hinge axis such that the effective axis of rotation of the proof mass (i.e., the axis about which the proof mass begins to rotate in response to acceleration along SA) is external to the proof mass and to anything directly attached to the proof mass, such as the flexures. The result will be an accelerometer in which translational motion along the sensitive axis is the dominant response to an acceleration along such axis. An uncoupled design, with the center of mass of the proof mass coincident with the hinge axis will generally be preferred. Nevertheless, locating the center of gravity off of hinge axis HA, or making the hinge axis of flexures 20 and 22 parallel but not coincident, may be desirable for some applications. For example, it sometimes may be desirable to use dissimilar crystal force transducers in order to achieve good tracking while having output frequencies sufficiently widely separated that they never produce the same frequency at both outputs at the same time. This condition can be achieved while still retaining uncoupled translation in response to acceleration and rotation in response to temperature, if the center of the proof mass is offset to match the center of compliance.

One of the factors that has inhibited the use of quartz crystal force – sensing elements in ac – celerometers has been the problem of proof mass caging. Quartz crystal force sensors require a comparatively large mass to produce a suitable frequency change in response to acceleration. However, crystalline quartz sensors are quite fragile, and the proof mass to which a given crystal is attached must therefore be constrained or caged, such that an out – of – range acceleration does not damage the crystal. The problem of caging is further complicated by the inevitability of thermal mismatch when crystalline quartz sensors are used. The crystals are quite stiff, and thermal expansion mismatches on the order of two parts per million per degree Celsius will produce a 30% – 40% of full scale deflection if compliance allows it. This feature makes accurate caging over an extended temperature range difficult, and it has a subtle but important side effect. Lack of accurate caging imposes an added burden of shock tolerance on the flexures, and the sensitivity of the caging problem to thermal mismatches has limited the choice of flexure materials for vibrating beam accelerometers to a small number of metals. However, it has become increasingly clear that the use of metallic flexures is a significant limitation on achievable bias stability of a vibrating beam accelerometer. Fused quartz flexures have demonstrated greatly improved stability, but add a new dimension to the caging problem since the flexures as well as the crystals must be protected from brittle failure due to shock overloads.

The accelerometer of the present invention provides a simple and elegant solution to the caging problem. Referring to FIGURE 2, proof mass 70, consisting of weights 30 and 32 and proof mass base 18, is caged along hinge axis HA at shock gaps 160 and 162, and is caged along pendulous axis PA at shock gaps 164, 166, 168 and 170. The width of these shock gaps is exaggerated in FIGURE 2, and is typically on the order of 2 − 3 thousandths of an inch (0.001" = 0.0254 mm). The edges of annular support 16 and proof mass base 18 at these shock gaps is preferably gold − plated to minimize contact stresses during shock loading, and to inhibit the generation of static charge. Such gold − plating will generally eliminate the need for metallization on flexures 20 and 22, allowing these flexures to realize their inherently high mechanical stability without compromise. The width of the shock gaps takes into account the fact that the crystals are long and thin, and that the crystal ends can therefore accommodate lateral movements more readily than axial movements.

Caging of proof mass 70 along sensitive axis SA is accomplished by means of shock pads 180 and 182 on the upper surface of the proof mass base to either side of weight 30, and a similar set of shock pads on the lower surface of the proof mass base, directly under pads 180 and 182. Pads 180 and 182 extend to within a few tenthousandths of an inch (0.0001" = 2.54 $\mu$m) of the lower surface of upper frame 10, and the pads on the lower surface of the proof mass base extend to within a similar distance of the upper surface of lower frame 12. Pads 180 and 182 are located along hinge axis HA and are equidistant from pendulous axis PA. The use of pads located along hinge axis HA, in conjunction with crystals 34 and 38 located on opposite sides of the hinge axis from one another, produces a caging arrangement in which the shock stop clearance is constant and independent of temperature.

It will be appreciated from FIGURES 1 and 2 that caging of proof mass 70 is independent of temperature, by reason of the symmetry of the accelerometer elements. An appropriate compliance for shock caging in the plane of the reed assembly, i.e. along the hinge axis, may be conveniently controlled by controlling the compliance of arms 56, 58, 66 and 68 to either side of flexures 20 and 22. In general, for an elastically supported, linearly translational system, the static displacement d is given by:

$$d = \frac{0.249}{f_n^2} \; m/g \quad \left\{ = \frac{9.8}{f_n^2} \; inches/g \right\}$$

where $f_n$ is the resonant frequency and g is the acceleration due to gravity. Along the sensitive axis, d and $f_n$ are controlled by the scaling of the accelerometer. Along the hinge axis, there is a choice for $f_n$, as long as the resonant frequency is greater than 2000 Hz, to put it above standard aerospace vibration spectra. Generally, this resonance will be 3000 − 4000 Hz if everything is made as rigid as possible, giving static displacement d between 15.2 nm and 25.4 nm (0.6 and 1.0 microinches) per g. If the flexure strength requires that shear loading be kept to 1000g equivalent, then caging stops along this axis must be set 0.0152 − 0.254 mm (0.0006 − 0.0001 inches), a difficult clearance to achieve in manufacturing. However, if additional compliance is introduced through arms 56, 58, 66 and 68, so that $f_n$ is lowered to 2200 Hz, then the static displacement increases to 50.8 nm (2.0 microinches) per g, allowing the hinge axis shock stops to be set at 0.0254 mm (0.002 inches). Clearances of this order can be produced economically and automatically as a by − product of standard laser cutting operations. Quartz flexures 20 and 22 are quite stiff and therefore limited by their tensile strength when loaded in direct tension, but they can accommodate quite finite displacements by buckling when in compression. The flexure symmetry assures that shocks along pendulous axis PA will always place one flexure in compression, and the buckling limit on the flexure will protect the one in tension by allowing the proof mass 70 to rotate slightly into a stop. The flexure symmetry also couples small rotations about sensitive axis SA to displacements along SA in the normal (linearly elastic) sensing mode, but these rotations are on the order of ten nanoradians at full − scale input and so are easily accommodated.

The clearances appropriate for gas damping of translational movement of the proof mass along sensitive axis SA and rotation of the proof mass about hinge axis HA are nearly an order of magnitude larger than those required for a shock caging along these axes. Such shock caging is therefore provided by shock pads 180 and 182, and the corresponding pads on the lower surface of the proof mass base. These pads are placed on hinge axis HA where they coincide with the center of mass of the proof mass. Since minor mismatches of thermal coefficients of expansion in the structure will be symmetrical with respect to hinge axis HA, they will cause small rotations about hinge axis HA, but no significant translation along the sensitive axis. The functioning of the shock pads will therefore be independent of temperature, even with significant thermal mismatch. This feature provides greater flexibility in the choice of materials, and is one of the characteristics of the accelerometer of the present invention that makes it possible to combine the low temperature coefficient (and the associated great strength) of fused quartz with the relatively high temperature coefficient of crystalline quartz.

The flexure motions required to accommodate the principal degrees of freedom of the proof mass have already been described with respect to FIGURES 5 and 6. It is to be noted that the motion of the effective hinge axis HA relative to the center of mass is either zero, in the rotational mode shown in FIGURE 5 or very small in the translational mode shown in FIGURE 6. In either case, the motion will produce, in response to a cross axis input, only a torque that is a common mode signal rejected by the frequency difference processing diagrammed in FIGURE 9. The geometric errors that must be of concern are those which produce forces along the sensitive axis. There is such a force in the case of rotation since a side force tending to compress an up-tilted flexure and stretch a down-tilted flexure will produce a net upward force on both sides of the proof mass. The result is a slight shift in apparent alignment, which is comparable to the actual small rotation angle and is an easily modeled function of temperature. In the case of translational movement of the proof mass, a cross axis input along either HA or PA will tend to lift one flexure slightly and push the other down slightly. Conventional cross-coupling terms therefore are subject to first-order cancellation.

Dual crystal compensation of vibration rectification coefficient (VRC) effects caused by force crystal nonlinearities is made to be accurate and automatic in the accelerometer of the present invention, because the crystals are attached to a common proof mass. Identity of dynamic inputs to the crystals, which assures good VRC cancellation, requires only that the rotational natural frequency of the proof mass be much higher than its translational natural frequency. This condition is easily assured by placing the force crystals near the edges of the proof mass, so that their radius from the center of the proof mass is substantially greater than the radius of gyration.

The accelerometer of the present invention can in general be fabricated using steps well known to those skilled in the art. For example, quartz reed assembly 14 may be fabricated from a unitary piece of fused or amorphous quartz, using techniques that are well developed in the art relating to closed loop accelerometers. See for example, U.S.-A-4,394,405. Similarly, force sensing crystals 24 and 38 are known elements that have previously been used in connection with closed loop accelerometers and other force-sensing devices. Once the individual parts of the accelerometer of the present invention have been fabricated, the accelerometer undergoes a final assembly in which the weights are joined to the proof mass base, the reed assembly is secured between the upper and lower frames, and finally force-sensing crystals 34 and 38 are attached to weights 30 and 32 and to mounting blocks 24 and 26 by means of a suitable adhesive such as an epoxy adhesive.

During the final assembly, it is important to maintain the proof mass base in exact alignment within annular support 16 along two axes. Such exact alignment is important for achieving symmetry of the air-damping gaps, for achieving predetermined tolerances between the shock stops and the upper and lower frames, and to insure that there is no twist between the ends of the crystals. Permitting the proof mass to translate along sensitive axis SA during final assembly compromises all three of these design features. If such translation occurs, the bias, vibration rectification, and linearity of the accelerometer will be adversely affected. If the proof mass is permitted to rotate during attachment of the crystals, the crystals cannot be properly attached to the weights and mounting blocks. Furthermore, when the proof mass is rotated, the effectiveness of the shock stop feature is negated, leaving the sensor vulnerable to high shock inputs.

Quartz reed assembly 14 does not include any built-in alignment characteristics that are useful at the final assembly stage. Because any misalignment along either the translation or rotation axis is unacceptable, suitable means must be devised for fixing the proof mass in place while the crystals are attached. Although various shimming techniques could be devised, applicants have discovered that a much preferable method involves the use of temporary bridges between the proof mass base and the surrounding annular support.

The concept of a bridge is illustrated in FIGURE 10 for the accelerometer of the present invention.

In FIGURE 10, the width of shock gaps 160, 162, 164, 166, 168 and 170 are greatly exaggerated for the purpose of illustration. As shown in FIGURE 10, two bridges 200 and 202 are formed between proof mass base 18 and annular support 16. For an accelerometer such as the accelerometer of the present invention, wherein the proof mass base and annular rim are fabricated from a unitary amorphous quartz structure, bridges 200 and 202 are preferably formed during fabrication of quartz reed assembly 14 by leaving quartz material 204 between the proof mass base and support, as illustrated in FIGURE 11. Alternately, as shown in FIGURE 12, the bridges could be formed by means of a suitable substance 206, such a epoxy, that spans the shock gap between the support and proof mass base. In the accelerometer shown in FIGURE 10, the bridges are preferably located on opposite sides of hinge axis HA and pendulous axis PA from one another, preferably closer to the pendulous axis, such that a line between the bridges is substantially perpendicular to the hinge axis. For example, if one bridge spanned shock gap 164, 166 or 162, then the other bridge would span shock gap 170, 168 or 160, respectively. In a preferred embodiment, the bridges are positioned exactly opposite one another with respect to the point of intersection of the hinge and pendulous axes, as shown in FIGURE 10. The bridges are maintained throughout the processing of quartz reed assembly 14, including the etching and laser trim operations. The bridges remain through the subassembly of reed assembly 14 (i.e., attachment of weights 30 and 32), and are still intact during the final assembly of the accelerometer components. Only after force – sensing crystals 34 and 36 have been mounted with a suitable adhesive, and the adhesive cured, are the bridges removed. One suitable method of removing the bridges is to use a laser, such as a carbon dioxide laser, to melt back each bridge in a stress – free manner. Access of the laser beam to the bridges can be via cutaway sections 104 and 106 in upper frame 10, or via cutaway sections 124 and 126 in lower frame 12. By retaining the bridges through assembly, the proof mass is naturally aligned relative to the support in its initial state. The uniformity of the etching process assures nearly perfect alignment by this method.

While the preferred embodiments of the invention ha ve been illustrated and described, it should be understood that variations will be apparent to those skilled in the art. For example, crystals 34 and 38 could comprise conventional single beam rather than dual beam force crystals. Flexures 20 and 22 could be made of materials other than fused quartz, e.g., crystalline quartz, metal, metallic glass, or ceramic. Each of these substances would provide a tradeoff between performance and ease of manufacture. As another example, the accelerometer of the present invention may be used to measure angular acceleration. In such an arrangement, processor 82 shown in FIGURE 9 would determine the angular acceleration as a function of the sum of frequences $f_1$ and $f_2$ rather than a function of the difference of the frequencies. As another example, only a single weight can be used, rather than dual weights 30 and 32 of the illustrated embodiment. Although a single weight embodiment would have a reduced parts count, its output would in most cases include a significant misalignment term related to the mismatch of second order nonlinearities. Accordingly, the invention is not to be limited to the specific embodiments illustrated and described.

## Claims

1. An accelerometer for measuring acceleration along a sensitive axis, comprising:

    a body (10,12,16);

    a proof mass (18,30,32);

    mounting means for mounting the proof mass to the body, the mounting means comprising first and second flexures (20,22) connected to the proof mass and arranged to permit substantially uncoupled translational and rotational motion of the proof mass with respect to the body such that the translational motion is along the sensitive axis (SA) and such that the rotational motion is about a hinge axis (HA) perpendicular to the sensitive axis, the first and second flexures being positioned on opposite sides of a pendulous axis (PA) that is normal to the hinge axis and to the sensitive axis and that passes through the center of mass of the proof mass, whereby acceleration of the accelerometer along the sensitive axis results in said translational motion of the proof mass along the sensitive axis; and

    sensing means (34,38) for reacting to said translational motion by producing a signal indicative of acceleration along the sensitive axis, characterised in that each flexure (20,22) intersects a plane containing the sensitive (SA) and hinge (HA) axes.

2. An accelerometer according to Claim 1, wherein each flexure (20,22) comprises a leaf flexure formed so as to undergo angular bending that results in rotation of the proof mass (18,30,32) about the hinge axis (HA), and so as to undergo S – bending that results in translation of the proof mass along the sensitive axis (SA).

3. An accelerometer according to Claim 1 or Claim 2, wherein the mounting means further comprises a support (16), and wherein each flexure (20,22) comprises a leaf member extending between the support and the proof mass (18,30,32), the leaf members of the flexures lying in a common plane normal to the sensitive axis (SA) and parallel to the hinge axis (HA).

4. An accelerometer according to any preceding claims, wherein the first flexure (20) extends from a first point of connection to a support (16) to a first point of connection to the proof mass (18,30,32) in a first direction along the pendulous axis (PA), and wherein the second flexure (22) extends from a second point of connection to the support to a second point of connection to the proof mass in a second direction along the pendulous axis opposite to the first direction.

**5.** An accelerometer according to Claim 4, wherein the flexures (20,22) are radially symmetric with respect to a point between the flexures.

**6.** An accelerometer according to Claim 4 or Claim 5, wherein the proof mass (18,30,32) is symmetric along any line passing through a center of the proof mass.

**7.** An accelerometer according to any preceding claim wherein said sensing means comprises first and second force sensing elements (34,38) connected between the body (10,12,16) and the proof mass (18,20,32) the first and second force sensing elements being physically separate from the flexures (20,22) and connected to the proof mass at respective first and second connection points, the first and second connection points being located on opposite sides of the hinge axis (HA) from one another.

**8.** An accelerometer according to Claim 7, wherein the force sensing elements (34,38) are connected such that differential thermal expansion and contraction of the force sensing elements with respect to the other components of the accelerometer results primarily in rotation of the proof mass (18,30,32) about the hinge axis (HA).

**9.** An accelerometer according to Claim 8, wherein the first force sensing element (34) extends from the first connection point in one direction along the sensitive axis (SA), and wherein the second force sensing element (38) extends from the second connection point in a direction opposite to that of the first force sensing element.

**Patentansprüche**

**1.** Beschleunigungsmesser zur Messung der Beschleunigung längs einer sepsitiven Achse, umfassend:
einen Körper (10, 12, 16);
eine Probemasse (18, 30, 32);
Montagemittel zur Anbringung der Probemasse an dem Körper,
wobei
die Montagemittel umfassen erste und zweite Biegungen (20, 22), die mit der Probemasse verbunden und angeordnet sind, um der Probemasse im wesentlichen kupplungslose Translations – und Rota – tionsbewegung gegenüber dem Körper zu gestatten derart, daß die Translationsbewegung längs der sensitiven Achse (SA) und die Rotationsbewegung längs einer Gelenk – Achse (HA) senkrecht zu der sensitiven Achse ist, die erste und zweite Biegung sind positioniert an gegenüberliegenden Seiten einer Pendel – Achse (PA), die senkrecht ist zu der Gelenk – Achse und der sensitiven Achse und die durch den Schwerpunkt der Probemasse hindurchgeht, wodurch Beschleunigung des Beschleunigungsmes – sers längs der sensitiven Achse in die besagte Trapslations – Bewegung der Probemasse längs der sensitiven Achse resultiert; und
Sensor – Mittel (34, 38), die auf die Translations – Bewegung reagieren durch Erzeugung eines die Beschleunigung längs der sensitiven Achse anzeigenden Signals, dadurch gekennzeichnet, daß jede Biegung (20, 22) eine die sensitive (SA) und Gelenk – Achse (HA) enthaltende Ebene schneidet.

**2.** Beschleunigungsmesser nach Anspruch 1, wobei jede Flexur/Feder (20, 22) eine Blattfeder umfaßt, die so geformt ist, daß sie eine Winkel – Biegung erfährt, die resultiert in Rotation der Probe – Masse (18, 30, 32) um die Gelenk – Achse (HA), und so, daß sie eine S – Biegung erfährt, welche resultiert in Translation/Längsbewegung der probemasse längs der sensitiven Achse (SA).

**3.** Beschleunigungsmesser nach Anspruch 1 oder 2, wobei die Montagemittel ferner einen Halter oder Träger (16) umfassen, und wobei jede Biegung bzw. Feder (20, 22) ein Blatt – Glied umfaßt, welches sich zwischen dem Halter/Träger und der Probemasse (18, 30, 32) erstreckt, wobei die Blattglieder der Federn in einer gemeinsamen Ebene senkrecht zu der senstitiven Achse (SA) parallel zu der Gelenkachse (HA) liegen.

**4.** Beschleunigungsmesser nach einem der vorhergehenden Ansprüche, wobei die erste Biegung bzw. Feder (20) sich erstreckt von einem ersten Verbindungspunkt mit der Stütze bzw. dem Träger (16) zu einem zweiten Verbindungspunkt zu der Probemasse (18, 30, 32) in einer ersten Richtung längs der Pendelachse (PA), und wobei die zweite Biegung bzw. Feder (22) sich erstreckt von einem zweiten Verbindungspunkt mit der Stütze oder dem Träger zu einem zweiten Verbindungspunkt zu der Probemasse in einer zweiten Richtung längs der Pendel – Achse entgegengesetzt zu der ersten Richtung.

**5.** Beschleunigungsmesser nach Anspruch 4, wobei die Biegungen bzw. Federn (20, 22) radial symme – trisch sind gegenüber einem Punkt zwischen den Biegungen bzw. Federn.

**6.** Beschleunigungsmesser nach Anspruch 4 oder 5, wobei die Probemasse (18, 30, 32) symmetrisch ist längs irgendeiner durch ein Zentrum der Probemasse hindurchgehenden Linie.

**7.** Beschleunigungsmesser nach einem der vorhergehenden Ansprüche, wobei die Sensormittel umfassen erste und zweite Kraft – Sensor – Elemente (34, 38), die verbunden sind zwischen dem Körper (10, 12, 16) der Probemasse (18, 20, 32), die ersten und zweiten Kraft – Sensor – Elemente sind physikalisch getrennt von den Biegungen (20, 22) und verbunden mit der Probemasse an ersten und zweiten Verbindungspunkten, die ersten und zweiten Verbindungspunkte sind lokalisiert an gegenüberliegenden Seiten der Gelenkachse.

**8.** Beschleunigungsmesser nach Anspruch 7, wobei die Kraft – Fühl – Elemente (34, 38) derart verbunden sind, daß differentielle Wärmedehnung und – zusammenziehung der Kraft – Sensor – Elemente bezüg – lich der anderen Komponenten des Beschleunigungsmessers in erster Linie in Rotation der Probe – masse (18, 30, 32) um die Gelenkachse (HA) resultieren.

**9.** Beschleunigungsmesser nach Anspruch 8, wobei das erste Kraft – Sensor – Element (34) sich erstreckt von dem ersten Verbindungspunkt in eine Richtung längs der sensitiven Achse (SA), und wobei das zweite Kraft – Sensor – Element (38) sich erstreckt von dem zweiten Verbindungspunkt in eine Richtung entgegengesetzt der des ersten Kraft – Sensor – Elementes.

**Revendications**

**1.** Accéléromètre pour la mesure de l'accélération le long d'un axe sensible, comprenant :

un corps (10, 12, 16) ;

une masse éprouvette (18, 30, 32) ;

un moyen de montage pour monter la masse éprouvette sur le corps, ce moyen de montage comprenant des première et seconde parties courbes (20, 22) reliées à la masse éprouvette et disposées pour permettre un mouvement de translation et de rotation de la masse éprouvette pratiquement désaccouplé par rapport au corps, de telle façon que le mouvement de translation s'effectue le long de l'axe sensible (SA) et que le mouvement de rotation s'effectue autour d'un axe d'articulation (HA) perpendiculaire à l'axe sensible, les première et seconde parties courbes étant placées sur des côtés opposés d'un axe oscillant (PA) qui est normal à l'axe d'articulation et à l'axe sensible et qui passe par le centre de masse de la masse éprouvette, de sorte que l'accélération de l'accéléromètre le long de l'axe sensible a pour résultat ledit mouvement de translation de l'éprouvette le long de l'axe sensible ; et

des moyens de captage (34, 38) conçus pour réagir audit déplacement de translation en produisant un signal indicatif de l'accélération le long de l'axe sensible, caractérisé en ce que chaque partie courbe (20, 22) coupe un plan qui contient l'axe sensible (SA) et l'axe d'articulation (HA).

**2.** Accéléromètre selon la revendication 1, dans lequel chaque partie courbe (20, 22) comprend une partie courbe en lame formée de façon à subir une courbure angulaire ayant pour résultat une rotation de la masse éprouvette (18, 30, 32) autour de l'axe d'articulation (HA), et de façon à subir une courbure en S ayant pour résultat un déplacement de la masse éprouvette le long de l'axe mobile (SA).

**3.** Accéléromètre selon la revendication 1 ou la revendication 2, dans lequel le moyen de montage comprend de plus un support (16), et dans lequel chaque partie courbe (20, 22) comprend un élément en lame placé entre le support et la masse éprouvette (18, 30, 32), les éléments en lame des parties courbes se trouvant dans un plan commun qui est normal à l'axe sensible (SA) et qui est parallèle à l'axe d'articulation (HA).

**4.** Accéléromètre selon l'une quelconque des revendications précédentes dans lequel la première partie courbe (20) s'étend, depuis un premier point de liaison à un support (16) jusqu'à un premier point de liaison à la masse éprouvette (18, 30, 32), dans une première direction le long de l'axe oscillant (PA) et dans lequel la seconde partie courbe (22) s'étend, depuis un second point de liaison au support jusqu'à un second point de liaison à la masse éprouvette, dans une seconde direction le long de l'axe oscillant qui est opposée à la première direction.

5. Accéléromètre selon la revendication 4, dans lequel les parties courbées (20, 22) sont symétriques en direction radiale par rapport à un point situé entre les parties courbes.

6. Accéléromètre selon la revendication 4 ou la revendication 5, dans lequel la masse éprouvette (18, 30, 32) est symétrique par rapport à toute ligne passant par un centre de la masse éprouvette.

7. Accéléromètre selon l'une quelconque des revendications précédentes, dans lequel ledit moyen de captage comprend un premier et un second éléments de captage de force (34, 38) reliés entre le corps (10, 12, 16) et la masse éprouvette (18, 20, 32), les premier et second éléments de captage de force étant physiquement séparés des parties courbes (20, 22) et étant reliés à la masse éprouvette en des premier et second points de liaison respectifs, ces premier et second points de liaison étant disposés l'un par rapport à l'autre sur des côtés opposés de l'axe d'articulation (HA).

8. Accéléromètre selon la revendication 7, dans lequel les éléments de captage de force ( 34, 38) sont reliés de telle façon que la différence d'expansion et de contraction thermiques des éléments de captage de force par rapport aux autres composants de l'accéléromètre a pour résultat essentiel une rotation de la masse éprouvette (18, 30, 32) autour de l'axe d'articulation (HA).

9. Accéléromètre selon la revendication 8, dans lequel le premier élément de captage de force (34) s'étend, depuis le premier point de liaison dans une direction le long de l'axe sensible (SA), et dans lequel le second élément de captage de force (38) s'étend, depuis le second point de liaison, dans une direction opposée à celle du premier élément de captage de force.

Fig. 1.

14

*Fig. 2.*

*Fig. 3.*

15

EP 0 273 048 B1

Fig.4.

Fig.5.

Fig.6.

Fig.7.

EP 0 273 048 B1

*Fig.4.*

*Fig.5.*

*Fig.6.*

*Fig.7.*

16

*Fig. 8.*

*Fig. 9.*

Fig. 10.

Fig. 11

Fig. 12